Europäisches Patentamt

European Patent Office

Office européen des brevets

(19)

(11) Publication number: **0 375 064**
**A2**

# EUROPEAN PATENT APPLICATION

(21) Application number: **89203245.9**

(22) Date of filing: **18.12.89**

(51) Int. Cl.⁵: **H01J 29/89**

(30) Priority: **23.12.88 US 289338**
**23.12.88 US 288833**

(43) Date of publication of application:
**27.06.90 Bulletin 90/26**

(84) Designated Contracting States:
**DE FR GB IT NL**

(71) Applicant: **North American Philips**
**Corporation**
**100 East 42nd Street 9th Floor**
**New York, N.Y. 10017(US)**

(72) Inventor: **Brennensholtz, Matthew Scott**
**c/o INT. OCTROOIBUREAU B.V. Prof.**
**Holstlaan 6**
**NL-5656 AA Eindhoven(NL)**
Inventor: **Greene, Raymond Geroe**
**c/o INT. OCTROOIBUREAU B.V. Prof.**
**Holstlaan 6**
**NL-5656 AA Eindhoven(NL)**

(74) Representative: **Koppen, Jan et al**
**INTERNATIONAAL OCTROOIBUREAU B.V.**
**Prof. Holstlaan 6**
**NL-5656 AA Eindhoven(NL)**

(54) **Projection color television display devices with improved white field uniformity.**

(57) The white field uniformity of a projection color TV employing three monochrome cathode ray tube assemblies is improved by matching the center-to-edge luminance gradient of the display image of the red-emitting and/or blue-emitting tube assemblies to that of the green-emitting tube assembly having an interference filter. In a preferred embodiment, such matching is achieved by applying an optical filter of varying density on outside surface of the display window of the tube.

FIG.3

EP 0 375 064 A2

**Projection color television display devices with improved white field uniformity**

This invention relates to projection color television (TV) display devices comprising monochrome cathode ray tube assemblies incorporating interference filters, and more particularly relates to such devices with improved white field uniformity.

Monochrome cathode ray tubes for projection television employ a single electron gun mounted in the neck of the tube to focus a single electron beam on the fluorescent display screen of the tube. A deflection yoke surrounding the neck of the tube, and associated electronic circuitry, cause the beam to scan the screen as well as to vary in intensity in response to a video signal to produce a monochrome display image.

In projection color television, three display images, each in one of the primary colors red, blue and green, are superimposed on a large projection screen to produce a full color display image. Because the images on the individual tube screens are not viewed directly, but are magnified and projected on a projection screen by a system of projection lenses, the individual cathode ray tubes are driven at higher loads than would be encountered for direct view tubes, in order to produce a full color display image of acceptable brightness.

Projection tubes having an interference filter are described in U.S. patent 4,683,398. The filter, herein referred to as a short wave pass (SWP) filter, is composed of alternating layers of materials of high and low refractive index. The filter is designed to result in a marked increase in luminous efficiency of the tube in the forward direction, as well as improved chromaticity and contrast in the display image. Even further improvements are provided, especially in light gain in the corners of the display image, by combining such an interference filter with an inwardly curved display window.

In these tubes, the interference filter is deposited directly upon the inner surface of the faceplate and the luminescent phosphor screen is deposited on the interference filter. The filter is typically composed of from 14 to 20 layers each having a thickness of about one-quarter of the central wavelength of the filter.

When the red, blue and green tubes are assembled into a projection color television, the tube drivers are adjusted to result in a desired white field at the center of the projection screen.

It is found, however, that often white field uniformity is increasing degraded as the distance from the center of the projection screen increases.

It is an object of the invention to improve the white field uniformity of a multi-tube projection color television display device employing at least one monochrome tube with an interference filter.

According to the invention, the white field uniformity is improved by at least substantially matching the center-to-edge luminance gradient of the display image of at least one of the projection tube assemblies to the center-to-edge luminance gradient of the display image of at least one of the other tube assemblies.

Tubes with interference filters, while bringing about a marked increase in luminous efficiency in the forward direction, as well as improved chromaticity and contrast, also bring about greater luminance in the center than at the edges of the display image, referred to herein as center-to-edge luminance gradient.

The display images of the tube assemblies comprised in the projection colour television display device often have different center-to-edge luminance gradients. When combined this results in an increased degradation of the white field uniformity as the distance from the center of the projection screen is increased.

Furthermore, uncontrollable variations in the thickness of the filters occurring during mass production of these tubes can result in edge luminances which vary from as low as about 30 to as high as about 70 percent of the center luminance.

According to a preferred embodiment of the invention, the green tube assembly employs an interference filter and the luminance gradient of the display image of the red tube assembly is at least approximately matched to that of the green tube assembly.

According to another preferred embodiment, the luminance gradient is matched by applying an optical filter having varying transmission from center to edge, to a surface of the display window of the red tube.

According to still another preferred embodiment, the red and green tube assemblies employ interference filters, and the interference filter for the red tube assembly is formed at a thickness to result in a center-to-edge luminance gradient of the display image smaller than that of the display image of the green tube assembly, and this gradient is then increased to match that of the display image of the green tube.

In a projection color television display device in which each tube assembly is provided with an interference filter, the white field uniformity is improved if the red and/or blue tube assemblies of a three-tube projection color TV is provided with an interference filter having a smaller number of layers than the filter of the green tube assembly. Further, means for matching of the center-to-edge luminance gradient of the display image of the red and/or blue tube assembly to the center-to-edge luminance gradient of the display image of the green tube may be provided. Such means need only match over a smaller range of center-to-edge gradients.

According to a preferred embodiment, the filters of the red and/or blue tube assembly have 14 layers, while the filter of the green tube assembly has 20 layers.

The color projection television display device according to the invention will now be described in more detail by way of example. Reference is made to the drawings in which

Figure 1 is a perspective view, partly in section, of a projection television display tube of the prior art;

Figure 2a is a diagrammatic cross-section of a portion of the front of the display tube, showing the display window, luminescent screen and interference filter;

Figure 2b is a detailed cross-section of a portion of the window, screen and filter of Figure 2a;

Figures 3 and 4 are cross-sections similar to that of Figure 2b, for two different embodiments of a tube of the invention having an optical matching filter;

Figure 5 is a diagrammatic representation of a three-tube color projection television incorporating at least one display tube assembly of the invention;

Figure 6 is a diagrammatic representation of a tube/lens projector assembly including an optical matching filter of the invention;

Figure 7 is a cross-section similar to that of Figure 2b for a tube of the invention having an electron beam-attenuating matching layer; and

Figure 8 is a graph of luminance at the projection screen in Foot-Lamberts, and in percent of center luminance versus distance from the center of the screen in inches along the minor axis for two tubes of the prior art.

Figure 9 is a graph of major and minor edge luminances as percents of center luminance at the projection screen versus center cutoff of a 20 layer interference filter in a red CRT;

Figure 10 is a graph similar in all respects to that of Figure 3 for a 14 layer filter in a red tube; and

Figures 11 and 12 are graphs similar to Figures 9 and 10 for 20 and 14 layer filters in a blue tube, respectively.

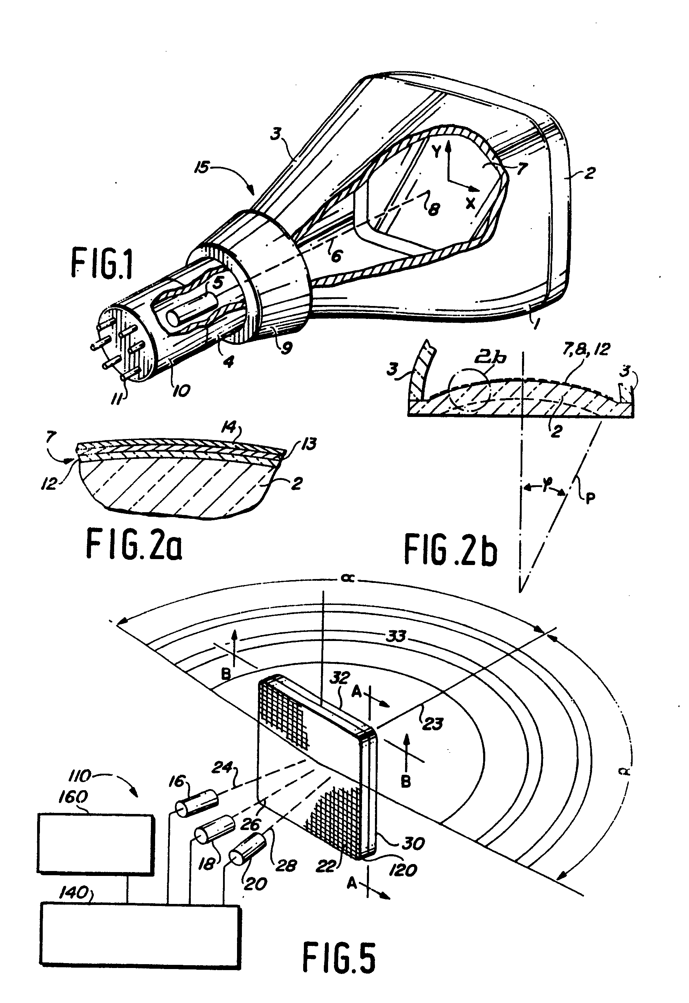

Figure 1 is a perspective view, partly broken away, of a projection television display tube 15 according to the prior art. The tube comprises a glass envelope 1 which consists of an inwardly curved display window 2, a cone 3, and a neck 4, within which is an electron gun 5 for generating an electron beam 6. The electron beam is focused on a curved display screen 7, provided on the inside of the display window 2 to form a spot 8. The electron beam is deflected over the display screen 7 in two mutually perpendicular directions along X, Y, axes (sometimes referred to as the major an minor axes, respectively), by means a system of deflection coils 9. Electrical connection to the gun 5 is provided through base 10 with connection pins 11.

Figure 2a is partial sectional view of the curved display window 2, the multi-layer interference filter 12, and the curved display screen 7. As seen in the more detailed Figure 2b, the display screen 7 consists of a layer of luminescent material (phosphor) 13 and a thin aluminum film 14. The display window in the preferred embodiment is preferably as near spherical as possible, having a radius of curvature $\phi$. Other embodiments include aspherical shapes.

The details of the filter design are known from the teachings of U.S. patents 4,683,398 cited above, and are therefore not a necessary part of this description. Briefly, the filter comprises alternating layers of low refractive index and high refractive index materials, such as $SiO_2$ and $TiO_2$ having refractive indices of 1.44 and 2.35 respectively, preferred for their hardness and durability. The average optical thickness of the layers, which is equal to the physical thickness times the index of refraction of the layer, is approximately equal to 0.25 $\lambda f$, where $\lambda f$ is the central or cut-off wavelength of the filter, which in turn is equal to p $\times$ $\lambda$, where p is an integer having a value between 1.18 and 1.32 and $\lambda$ is the central wavelength of the phosphor. These layers are typically formed by vapor deposition directly on the inner surface of the glass face panel until a total of from 14 to 20 layers have been deposited.

In addition to a short wave pass (SWP) filter of the type described above, the interference filter may also be in the form of a band pass (BP) filter.

A conventional 3-tube color projection television device is shown diagrammatically in Figure 5, employing a rear projection screen 120. Video signals are received by television receiver circuits 140 and are projected through individual red, green and blue cathode ray tube (CRT)/lens projector assemblies 16, 18, and 20, onto the rear surface 22 of projection screen 120. The three CRT/lens projector assemblies 16, 18 and 20 each include a CRT and associated projection optics, and are arranged horizontally with respect to screen 120. The green assembly 18 is located so as to have its optical axis 26 coincide with the central projection axis, while the red and blue assemblies 16 and 20, having optical axes 24 and 28 respectively, are laterally and angularly offset from the green axis 26.

As already stated, uncontrollable variations in the thicknesses of the filters occurring during mass production of tubes can result in edge luminances of the display images which vary as much as about 30 to 70 percent of the center luminance. The most difficult to control in this respect is the green SWP filter used in conjunction with a Tb-activated phosphor. By way of example, for such a filter having 20 layers and a central wavelength of about 548 nanometers, the optical thickness is only about 2.7 microns, and the physical thickness is about 1.4 microns. Controlling this thickness to within + or - 1 percent still results in a minor axis edge luminance of about 55 + or - 5 percent of center luminance. In addition, for a given center luminance, the edge luminance of the green tube assembly is typically lower than that of the red tube assembly, with the result that when a three-tube projection set is adjusted at the screen center for a desired white field, the edge of the field has a magenta color. This non-uniformity of the white field becomes visible and thus commercially unacceptable as the difference between edge luminances of the two tube assemblies exceeds about 5 percent.

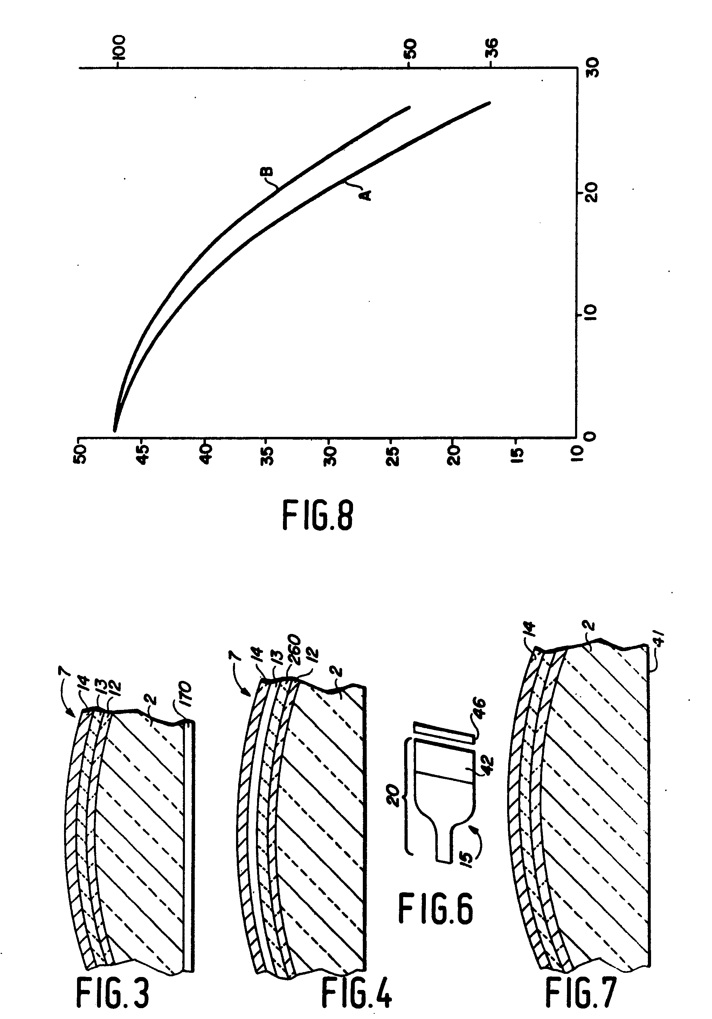

Figure 8 represents graphically the center-to-edge luminance gradients along the minor axis of the projected image of typical red and green projection tube assemblies, in which luminance in Foot-Lamberts and luminance as a percent of center luminance on the vertical axes are plotted versus distance from the center of the display screen in inches on the horizontal axis. The drives of the two tubes have been adjusted to achieve 100% of a target luminance value, about 47 Foot-Lamberts, at the screencenter. Curve A representing the output of the green tube assembly, falls to a value of about 36% of center luminance at the edge of the screen, while curve B representing the red tube assembly, falls to about 50%.

In accordance with the invention, white field uniformity from center-to-edge can be improved by matching, to within preferably at least 5 percent, the center-to-edge luminance gradients of the tube assemblies for a projection set. this may be accomplished in one of several ways. The largest gradient can be reduced by reducing the center luminance or increasing the edge luminance. However, the green tube assembly usually has the the largest average gradient, and also has the weakest tube in the system. Thus, the green tube is usually driven at or near its maximum power. Reducing the center luminance will then reduce the overall luminance of the projection set, while increasing the edge luminance may exceed the maximum drive at which optimum performance is obtained. Accordingly, it is normally preferred to match gradients by increasing the smallest gradient. One average, the red tube assembly normally has the smallest gradient. Furthermore, since the red tube is normally stronger than the green tube, the red tube's gradient can be increased by increasing its drive toward the center, by decreasing its drive toward the edges, or by attenuating either its electron beam or light output toward the edges, or by attenuating either its electron beam or light output toward the edges.

In the conventional 3-tube projection set having red, green and blue tubes, using for example, $Y_2O_3$:Eu, YAG:Tb and ZnS:Ag phosphors, respectively, the green tube is driven about four times as hard as the red tube and twice as hard at low current levels as the blue tube. As is known, these are approximate values and vary with current due to the different degrees of non-linearity of the different phosphors. However, these values show that considerable increases in the drive levels of the red and blue tubes can be tolerated in order to compensate for any decrease in luminance caused by gradient matching.

Modulating the drive signal to achieve a gradual change in drive from center to edge can readily be achieved in a known manner by means of programmable gain amplifiers synchronized with the vertical and horizontal scan rates. The means for achieving this modulation is represented by box 160 in Figure 5.

A gradual increase in attenuation of the electron beam toward the edges could be achieved, for example, by gradually increasing the thickness of he aluminum layer 14 toward the edges, as shown schematically in Figure 7. (note also in Figure 7 that the front surface 41 of display window 2 may be flat, as well as curved, as shown in Figures 2,3 and 4.) This could be accomplished, for example, in a known manner, by using a rotating dodger during vapor deposition of the aluminum layer.

Other electron beam attenuating layers normally present inside a cathode ray tube, such as a getter layer, could also be graded to achieve the same result.

Attenuation of light output can be achieved by placing an optical filter having decreased transmission towards its edges, in the light path, either inside the tube, as shown by layer 260 between interference filter 12 and phosphor screen 13 in Fig. 4, or preferably outside the tube, as shown by layer 170 on the front of faceplate 2 in Figure 3, and by layer 46 adjacent projection optics 42 in Figure 6. The layer could also be located on a lens surface in the projection optics.

The optical filter can, for example, be a coating or plate of varying optical density or a "half tone" type pattern consisting of alternate clear and opaque areas.

Where a half tone pattern is used, care must be taken that the pattern has sufficiently fine resolution to avoid its noticeable appearance on the projection screen. This is particularly important when the filter is inside the tube near the projection focal plane.

A technique which is attractive from the standpoint of flexibility and convenience of application, is the silk screening of a half tone pattern, such as dots of varying size and/or spacing, onto the outside of the faceplate of the tubes. A set of several silk screens representing 5 percent increments of center-to-edge gradients will allow matching of tube assemblies over the entire range of gradients likely to be encountered.

In the alternative, filter plates can be selected from standard sets having 5 percent gradient increments, and placed adjacent one element of the projection optics.

It is also possible to attenuate the light output toward the edges by stopping down the aperture of one or more elements of the projection optics, to achieve an effect that is sometimes referred to as vignetting.

An alternative technique for producing a half tone pattern is photolithography, a technique already practiced to produce "black matrix" for direct view color cathode ray tubes. In this known technique, a photosensitive coating (resist) is selectively exposed through a photomask, whereby either the exposed portions or the surrounding portions become insoluble in a developer, depending on whether the resist is positive or negative. An opaque coating is then formed over the top of the exposed resist, and the composite is developed, whereby the soluble portions of the resist and the overlying opaque layer are removed, leaving the desired pattern.

In a three-tube projection set where interference filters are employed at least in the green and red tube assemblies, it may be advantageous to adjust the thickness of the red tube's filter so that the range of center-to-edge gradients is entirely outside the range for the green tube. The, matching can be achieved for every red-green tube assembly set by increasing the center-to-edge luminance gradient of the display image of the red tube assembly.

While matching the red tube assembly to the green tube assembly has the most effect on white field uniformity, due to the eye's sensitivity to magenta type discolorations, the blue tube assembly may also need matching to the red and green tube assembly. Any technique that can be used on the red tube assembly can also be used on the blue tube assembly. The two tube assemblies need not use the same gradient matching technique. For example, a silk screened neutral density filter may be used on the red tube assembly and electronic correction on the blue tube assembly.

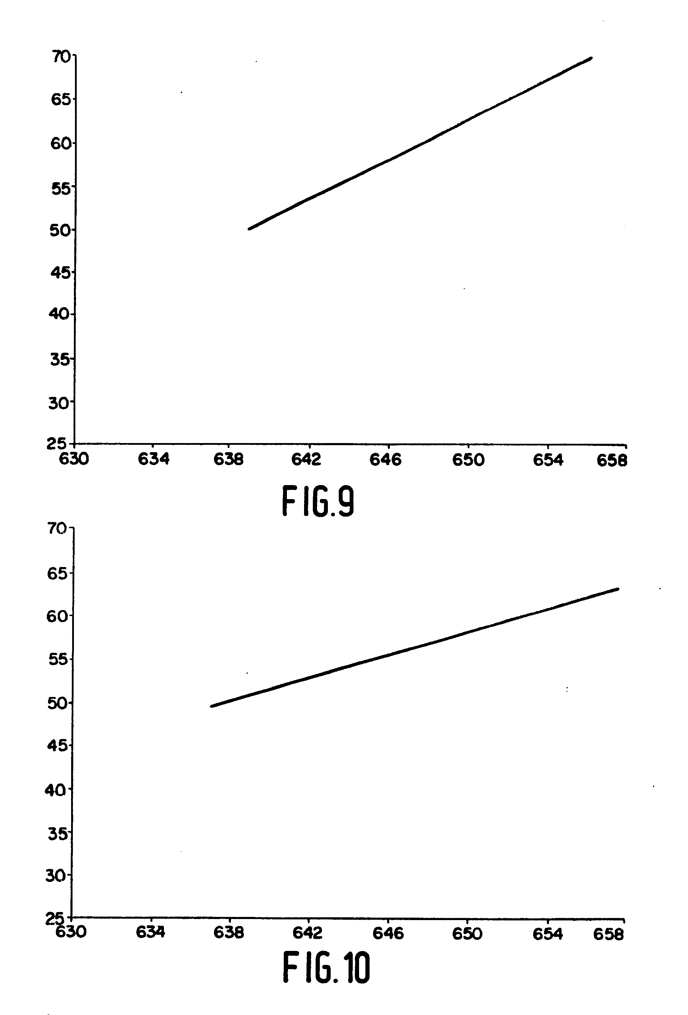

It has furthermore been discovered that the range of variation in center-to-edge luminance gradients of the display image of the red and blue tube assemblies with filters decreases with decreasing numbers of filter layers. Figure 9 is a graph of luminance gradient at the edges of a projection TV screen at the major and minor axes expressed as a percent of luminance at the center of the screen versus the center cutoff of the filter in nanometers. Center cutoff wavelength is defined as the wavelength where 50% transmission occurs. The thickness of the filter is directly related to the cutoff of the filter since the optical thickness of each layer is approximately equal to 0.25 $\lambda f$, where $\lambda f$ is the cutoff wavelength. For the 20 layer red filter, the luminance gradient at the screen edge ranges from about 50% at about 638.5 nanometers up to about 70% at 656 nanometers, resulting in a slope of about 1.14.

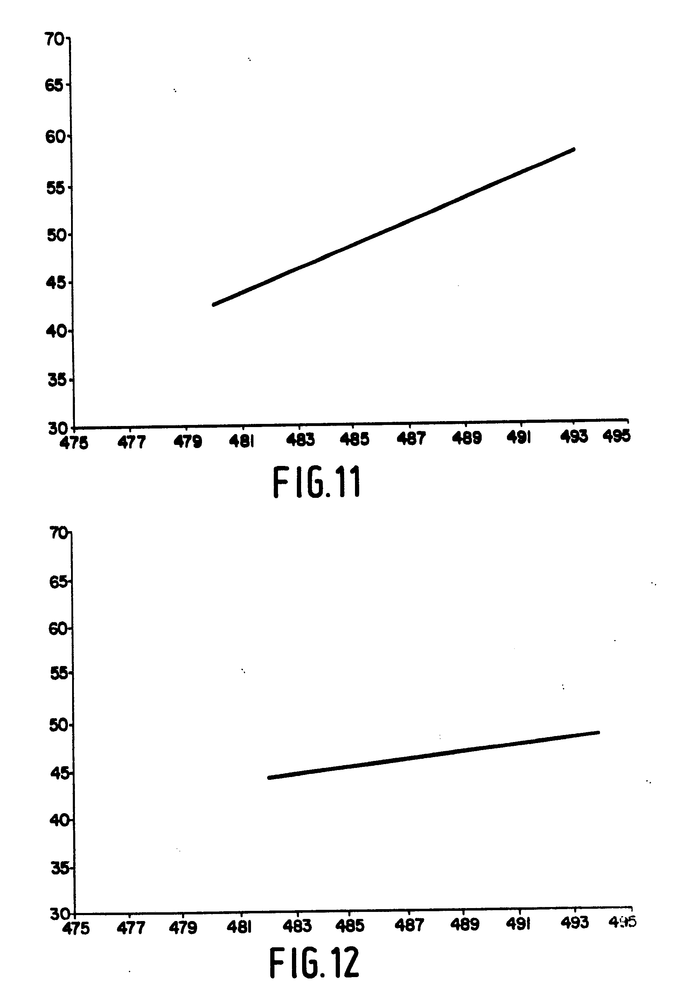

Figure 10 is a graph similar in all respects to that of Figure 4 except that the filter is a 14 layer red filter rather than a 20 layer red filter. As may be seen from the Figure, the slope of the line is significantly smaller than the corresponding slopes for the 20 layer filter, that is, about 0.66, a significant decrease.

Figures 11 and 12 show similar graphical presentations of the relationship between luminance gradient and center cutoff for a 20 layer blue filter and for a 14 layer blue filter, respectively.

For the 20 layer blue filter (Fig. 11) the edge luminance gradient ranges from about 42.5 percent at 480 nanometers to about 58 percent at 493 nanometers resulting in a slope of about 1.19. For the 14 layer blue filter (Fig. 12), the edge luminance gradient ranges from about 44 percent at 482 nanometers to about 48 percent at 494 nanometers, resulting in a slope of about 0.33, a significant decrease. White field uniformity is thereby increased. If necessary, or wanted, matching means, for instance such means as described above, may be provided. Such means need only match the luminance gradients over a smaller range of centre-to-edge gradients.

## Claims

1. A three-tube color projection television display device having red, blue and green emitting monochrome cathode ray display tube assemblies, the tubes each comprising in an evacuated envelope a display screen on the inside of a display window in the wall of the envelope, said display screen comprising a layer of a luminescent material, and at least one of the tubes also comprising an interference filter between the luminescent material layer and the display window, characterized in that means are included for matching the center-to-edge luminance gradient of the display image of at least one of the tube assemblies to the luminance gradient of the display image of at least one of the other tube assemblies.

2. The projection television display device of claim 1, characterized in that the green emitting tube assembly comprises an interference filter.

3. The projection television display device of claim 1 or 2, characterized in that gradient matching means are included for the red emitting tube assembly.

4. The projection television display device of claim 3 characterized in that gradient matching means are also included for the blue emitting tube assembly.

5. The projection television display device of claim 1, characterized in that the gradient matching means comprises an optical filter.

6. The projection television display device of claim 5, characterized in that the optical filter is inside the tube.

7. The projection television display device of claim 5, characterized in that the optical filter is located on the outside surface of the display window.

8. The projection television display device of claim 5, characterized in that the optical filter is located in the optical projection system adjacent the outside surface of the display window.

9. The projection television display device of claim 1, characterized in that the gradient matching means comprises the projection lens.

10. The projection television display device of claim 1, characterized in that the gradient matching means comprises tube drive signal modulating means.

11. The projection television display device of claim 1, characterized in that the gradient matching means comprises electron attenuation means inside the tube.

12. A projection television display device having red, blue and green emitting monochrome cathode ray display tube assemblies, the tubes each comprising ina an evacuated envelope a display screen on the inside of a display window in the wall of the envelope, said display screen comprising a layer of a luminescent material, each tube comprising an interference filter between the luminescent material and the display window, characterized in that the interference filter of the red and/or blue tube assembly has a smaller number of layers than the interference filter of the green tube assembly.

13. The projection television display device of claim 12, characterized in that the interference filter of the green tube assembly has 20 layers.

14. The projection television display device of claim 13, characterized in that the interference filter of the red tube assembly has 14 layers.

15. The projection television display device of claim 13, characterized in that the intereference filter of the blue tube assembly has 14 layers.

16. The projection television display device according to any one of the preceding claims, characterized in that the center-to-edge luminance gradients are matched to within 5%.

FIG.1

FIG.2a

FIG.2b

FIG.5

FIG.8

FIG.3

FIG.4

FIG.6

FIG.7

2-IV-PHA 60072C

FIG.9

FIG.10

3-IV-PHA 60072 C

FIG.11

FIG.12

4-IV-PHA 60072 C